(19) Europäisches Patentamt
European Patent Office
Office européen des brevets

(11) **EP 1 690 361 B1**

(12) **FASCICULE DE BREVET EUROPEEN**

(45) Date de publication et mention
de la délivrance du brevet:
**22.05.2013 Bulletin 2013/21**

(51) Int Cl.:
***H04B 7/06*** *(2006.01)*   ***H04B 7/08*** *(2006.01)*
***H04L 1/06*** *(2006.01)*

(21) Numéro de dépôt: **04805626.1**

(22) Date de dépôt: **02.12.2004**

(86) Numéro de dépôt international:
**PCT/FR2004/003107**

(87) Numéro de publication internationale:
**WO 2005/057838 (23.06.2005 Gazette 2005/25)**

(54) **PROCEDE D'EMISSION MULTI-ANTENNES D'UN SIGNAL PRECODE LINEAIREMENT, PROCEDE DE RECEPTION, SIGNAL ET DISPOSITIFS CORRESPONDANTS**

VERFAHREN ZUR MEHRANTENNENÜBERTRAGUNG EINES LINEAR VORCODIERTEN SIGNALS, ENTSPRECHENDE EINRICHTUNGEN, SIGNAL UND EMPFANGSVERFAHREN

METHOD FOR THE MULTI-ANTENNA TRANSMISSION OF A LINEARLY-PRECODED SIGNAL, CORRESPONDING DEVICES, SIGNAL AND RECEPTION METHOD

(84) Etats contractants désignés:
**AT BE BG CH CY CZ DE DK EE ES FI FR GB GR HU IE IS IT LI LT LU MC NL PL PT RO SE SI SK TR**

(30) Priorité: **04.12.2003 FR 0314272**

(43) Date de publication de la demande:
**16.08.2006 Bulletin 2006/33**

(73) Titulaire: **FRANCE TELECOM**
**75015 Paris (FR)**

(72) Inventeurs:
• **LE NIR, Vincent**
**F-61100 Flers (FR)**
• **HELARD, Maryline**
**F-35700 Rennes (FR)**
• **GOUPIL, Alban**
**F-51100 Reims (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**US-A1- 2003 185 310**

• **LE NIR V ET AL: "Reduced-complexity space-time block coding and decoding schemes with block linear precoding" ELECTRONICS LETTERS, IEE STEVENAGE, GB, vol. 39, no. 14, 10 juillet 2003 (2003-07-10), pages 1066-1068, XP006020635 ISSN: 0013-5194**
• **LIU Z ET AL: "Space-time coding for broadband wireless communications" WIRELESS COMMUNICATIONS AND MOBILE COMPUTING, XX, XX, vol. 1, no. 1, janvier 2001 (2001-01), pages 35-53, XP002210873**

**Description**

**1. Domaine de l'invention**

Le domaine de l'invention est celui des communications numériques sans fil. Plus précisément, l'invention concerne l'émission/réception d'un signal, mettant en oeuvre une matrice de précodage, dans le cadre d'un système multi-antennes de type MIMO (de l'anglais « Multiple Input Multiple Output » pour « Entrées Multiples Sorties Multiples »), encore appelé « BLAST » (de l'anglais « Bell Laboratories Layered Space-Time » pour « système spatio-temporel par couche des laboratoires Bell »).

L'invention trouve des applications dans le domaine des radiocommunications, notamment pour les systèmes de troisième, quatrième générations et suivantes.

**2. Solutions de l'art antérieur**

Plusieurs systèmes d'émission/réception, comprenant de multiples antennes sont déjà bien connus. Certains de ces systèmes utilisent un codage espace-temps, qui permet d'exploiter au mieux leur diversité spatio-temporelle. Cependant, l'efficacité spectrale de ces codes espace-temps est limitée.

Certains travaux ont alors conduit à l'étude de systèmes « spatio-temporel par couches » (ou LST de l'anglais « Layered Space-Time »), utilisant des techniques de multiplexage spatial, qui permettent d'obtenir des systèmes dont la capacité croît linéairement avec le nombres d'antennes émettrices et réceptrices.

Ainsi, Foschini, dans "Layered Space-Time Architecture for Wireless Communication in a Fading Environment When Using Multiple Antennas" (Bell Laboratories Technical Journal, Vol.1, No.2, Autumn, 1996, pp. 41-59) a présenté un premier système à multiplexage spatial, ayant pour but d'augmenter la capacité des systèmes de transmission. Pour cela, il a décrit une architecture « BLAST » diagonale (notée « D-BLAST ») dans laquelle les symboles codés ou non et entrelacés de chaque couche sont transmis successivement par chacune des antennes d'émission.

Wolniansky, Foschini, Golden et Valenzuela, dans "V-BLAST: An Architecture for Realizing Very High Data Rates Over the Rich-Scattering Wireless Channel" (Proc. ISSSE-98, Pisa, Italy, Sept .29, 1998), ont ensuite simplifié cette technique en modifiant l'architecture du système « BLAST » initial en un système vertical (« V-BLAST ») sans codage, et en utilisant en réception un algorithme d'annulation d'interférence avec un critère de forçage à zéro (ou ZF de l'anglais « Zero Forcing »). Cette architecture verticale procède tout simplement à un démultiplexage de la chaîne d'informations en sous-chaînes, chacune d'entre elles étant transmise par son antenne respective.

Par la suite, Baro, Bauch, Pavlic et Semmler ("Improving BLAST Performance using Space-Time Block Codes and Turbo Decoding", Globecom 2000, November 2000) ont envisagé de combiner les codes espace-temps et le turbo-décodage aux systèmes de type V-BLAST.

Ma et Giannakis ("Full-Diversity Full-Rate Complex-Field Space-Time Coding", IEEE Transactions on Signal Processing 2003) ont présenté une technique combinant un précodage linéaire avec les techniques MIMO de multiplexage spatial à l'émission. Dans cette technique, le précodage linéaire s'effectue en utilisant des matrices de précodage particulières basées sur des matrices de Vandermonde, les différents symboles à l'émission étant émis cycliquement. Le décodage en réception s'effectue selon un détecteur à Maximum de Vraisemblance.

Enfin, V. Le Nir et M. Hélard (« Reduced-complexity space-time block coding and decoding schemes with block linear precoding », Electronics Letters, IEE Stevenage, GB, vol.39, n.14, 10 juillet 2003) présentent une technique consistant à combiner un précodage linéaire et un codage orthogonal espace-temps en blocs d'Alamouti.

**3. Inconvénients de l'art antérieur**

Un premier inconvénient de la technique « BLAST » de mutliplexage spatial proposée par Foschini est sa complexité de décodage.Un autre inconvénient de cette technique, ensuite transformée en « V-BLAST », est que la diversité spatiale maximale des systèmes n'est pas exploitée.

La technique envisagée par Baro, Bauch, Pavlic et Semmler et consistant à combiner les codes espace-temps avec le système V-BLAST présente quant à elle l'inconvénient que la capacité maximale du système n'est pas exploitée.

Par ailleurs, ces différentes techniques de l'art antérieur ne permettent pas de traiter des canaux corrélés.

Ces différents inconvénients sont partiellement résolus par la technique de Ma et Giannakis, qui permet d'exploiter à la fois la diversité spatio-temporelle des systèmes, grâce à un précodage linéaire, et leur capacité maximale.

Cependant un inconvénient majeur de cette technique est le récepteur utilisé, qui doit être de type Maximum de Vraisemblance, encore noté MV. Ces récepteurs MV sont complexes à mettre en oeuvre, et limitent, du fait de leur complexité, la taille de la matrice de précodage au nombre d'antennes d'émission du système.

**4. Objectifs de l'invention**

L'invention a notamment pour objectif de pallier ces inconvénients de l'art antérieur.

Plus précisément, un objectif de l'invention est de fournir une technique d'émission et de réception multi-antennes d'un signal mettant en oeuvre une matrice de précodage présentant des performances accrues par rapport aux systèmes de précodage de l'art antérieur.

Un autre objectif de l'invention est de mettre en oeuvre une telle technique de moindre complexité et plus stable numériquement que les techniques de l'art antérieur. Plus particulièrement, l'invention a pour objectif de fournir une telle technique qui ne nécessite pas de codes espaces-temps.

L'invention a encore pour objectif de mettre en oeuvre une telle technique qui soit adaptée aux systèmes multi-antennes de type MIMO, tant pour des modulations de type monoporteuses que multiporteuses (OFDM et MC-CDMA).

L'invention a également pour objectif de fournir une telle technique permettant d'utiliser la capacité maximale du système MIMO et la diversité maximale du système.

L'invention a aussi pour objectif de mettre en oeuvre une telle technique qui présente des performances en taux d'erreur binaire améliorées par rapport à l'état de l'art, tout en proposant une solution de faible complexité en réception.

Encore un objectif de l'invention est de mettre en oeuvre une telle technique qui permette de traiter des canaux multi-antennes corrélés en limitant la dégradation des performances et qui ne dépend pas de la modulation.

## 5. Caractéristiques essentielles de l'invention

Ces objectifs, ainsi que d'autres qui apparaîtront par la suite, sont atteints à l'aide d'un procédé d'émission d'un signal formé de vecteurs comprenant chacun N symboles source à émettre, et mettant en oeuvre M antennes d'émission, où M est supérieur ou égal à 2.

Selon l'invention, on réalise un précodage linéaire dudit signal, mettant en oeuvre un produit matriciel d'une matrice source, formée desdits vecteurs organisés en lignes successives, par une matrice de précodage linéaire, délivrant une matrice précodée, puis on émet successivement des vecteurs précodés correspondant à des colonnes de la matrice précodée, les M symboles de chaque vecteur précodé étant distribués sur les M antennes.

Ainsi, l'invention repose sur une approche tout à fait nouvelle et inventive de l'émission d'un signal, mettant en oeuvre un précodage linéaire dans un système multi-antennes.

Plus précisément, l'invention propose d'effectuer un mapping espace-temps transposé, c'est-à-dire d'émettre sur les M antennes les symboles ayant subi le même précodage par colonne.

Cette solution diffère donc fortement de l'émission cyclique proposée par Ma et Giannakis, qui induisait une forte complexité en réception.

La technique de l'invention est particulièrement avantageuse puisqu'elle permet d'exploiter la capacité maximale du canal MIMO, étant donné qu'elle n'utilise pas de codes espace-temps, et la diversité spatio-temporelle maximale, grâce au précodage linéaire.

Le nombre M d'antennes à l'émission correspond au nombre de vecteurs à émettre, ces vecteurs composant les différentes lignes de la matrice source.

Avantageusement, la matrice de précodage d'un tel procédé d'émission est une matrice par blocs.

De façon préférentielle, la matrice de précodage est une matrice unitaire de taille supérieure ou égale à M.

Ainsi l'invention se distingue des techniques de l'art antérieur, puisque la taille de la matrice de précodage n'est pas toujours égale au nombre M d'antennes d'émission. Comme on le verra dans la suite de ce document, ceci est rendu possible, selon l'invention, grâce à la mise en oeuvre d'un décodage de faible complexité, qui permet donc un décodage simple, même avec de grandes matrices de précodage.

Cette matrice de précodage appartient au groupe comprenant les matrices d'Hadamard, les matrices de type Spéciale Unitaire de taille 2x2, également noté SU(2), les matrices de Fourier, les matrices de Vandermonde, et, plus généralement, les matrices unitaires.

Dans un mode de réalisation avantageux de l'invention, la matrice de précodage est une matrice par blocs de la forme :

$$\Theta_L = \sqrt{\frac{2}{L}} \cdot \begin{bmatrix} \Theta_{L/2} & \Theta_{L/2} \\ \Theta_{L/2} & -\Theta_{L/2} \end{bmatrix}^T$$

avec $\Theta_2 = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix}$ et

$\eta = \frac{\pi}{4} + k\frac{\pi}{2}$, $\theta_2 = \theta_1 - \frac{\pi}{2}$, et pour $i \in [1,2]$,

$\theta_i = \frac{\pi}{4} + k'\frac{\pi}{2}$ où k, k' sont des entiers relatifs.

L'invention concerne également un procédé de réception d'un signal émis sur M antennes d'émission, où M est supérieur ou égal à 2, mettant en oeuvre P antennes de réception, où P est supérieur ou égal à 2.

Selon l'invention, on reçoit sur les P antennes des vecteurs de réception que l'on répartit par colonnes dans une matrice de réception, les P symboles d'un vecteur de réception étant répartis sur les P antennes. Ensuite, le procédé met en oeuvre un traitement de la matrice de réception, comprenant une étape de multiplication par une matrice de déprécodage linéaire représentative d'une matrice de précodage linéaire utilisée à l'émission, de façon à obtenir une matrice déprécodée permettant d'extraire une estimation des symboles source émis.

On notera que, pour une réception optimale, le nombre P d'antennes en réception est supérieur ou égal au nombre M d'antennes en émission.

Par « déprécodage », on entend ici, et dans toute la suite du document, une opération sensiblement inverse de l'opération de précodage réalisée à l'émission.

Dans un premier mode de réalisation, la matrice de déprécodage est la matrice transposée conjuguée de la matrice de précodage.

Dans ce cas, le signal émis étant véhiculé entre les M antennes d'émission et les P antennes de réception par un canal de transmission, on multiplie, lors du traitement, la matrice de réception par une matrice représentative de l'inverse du canal de transmission, de façon à obtenir une matrice de symboles émis estimés. On multiplie ensuite la matrice de symboles émis estimés par la matrice de déprécodage.

En effet, la mise en oeuvre d'un système MIMO, comprenant une pluralité d'antennes d'émission et une pluralité d'antennes de réception, induit l'existence de différentes voies antennes d'émission/antennes de réception sur lesquelles peuvent être transmises les informations utiles, ces différentes voies pouvant être schématisées par une matrice de canal.

En réception, il faut inverser le codage canal estimé sur les différentes voies, pour retrouver les symboles émis. En émettant l'hypothèse que le canal est parfaitement connu du récepteur, il suffit de faire une inversion de la matrice de canal.

Le procédé de réception comprend en particulier une étape préliminaire de détection des M antennes d'émission mettant en oeuvre un algorithme à annulation successive.

Dans un second mode de réalisation, le signal émis étant véhiculé entre les M antennes d'émission et les P antennes de réception par un canal de transmission, la matrice de déprécodage est une matrice inverse d'une matrice globale associant la matrice du canal et la matrice de précodage linéaire.

Dans ce mode de réalisation, le procédé de réception met en oeuvre un décodage avec ordonnancement, qui permet de décoder prioritairement les canaux de meilleur rapport signal à bruit.

Dans ce cas, la matrice de déprécodage est déterminée par mise en oeuvre d'un algorithme de décomposition de Cholesky, ce qui permet d'obtenir une méthode de décodage peu coûteuse en calculs et moins complexe que les techniques de l'art antérieur.

Les techniques de type Maximum de Vraisemblance sont bien connues et satisfaisantes, mais complexes.

Pour le décodage de systèmes MIMO, l'utilisation d'une décomposition de Cholesky avec un critère de minimisation de l'erreur quadratique moyenne (ou « MMSE » de l'anglais « Minimum Mean Square Error ») est totalement nouvelle et permet de résoudre cet inconvénient de complexité inhérent aux techniques de l'art antérieur.

Une alternative à la décomposition de Cholesky serait d'utiliser une décomposition QR avec le critère ZF. Cette technique est également peu complexe, mais elle présente de moins bons résultats.

Selon une variante de l'invention, la matrice de déprécodage étant une matrice par blocs, le procédé de réception met en oeuvre une minimisation de la distance par changement de symbole dans un bloc. Ceci améliore encore le décodeur de l'invention.

L'invention concerne aussi un signal formé de vecteurs émis successivement sur M antennes d'émission, où M est supérieur ou égal à 2, les M symboles de chaque vecteur étant distribués sur les M antennes. Selon l'invention, les vecteurs sont des vecteurs précodés correspondant à des colonnes d'une matrice précodée obtenue par produit matriciel d'une matrice de précodage linéaire et d'une matrice source, formée de vecteurs source comprenant chacun N symboles source à émettre, les vecteurs source étant organisés dans ladite matrice source en lignes successives.

L'invention concerne également un dispositif d'émission d'un signal formé de vecteurs comprenant chacun N symboles source à émettre, et mettant en oeuvre M antennes d'émission, où M est supérieur ou égal à 2, pour un procédé d'émission tel que décrit précédemment.

L'invention concerne encore un dispositif de réception d'un signal émis sur M antennes d'émission, où M est supérieur ou égal à 2, le dispositif comprenant P antennes de réception, où P est supérieur ou égal à 2, pour un procédé de réception tel que décrit précédemment.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre un système à 4 antennes d'émission mettant en oeuvre une matrice source X et une matrice de précodage Θ selon l'invention ;
- la figure 2A présente un système à 4 antennes de réception d'un signal émis selon le système de la figure 1, selon un premier mode de réalisation de l'invention, dit « sans ordonnancement » ;
- la figure 2B présente un système à 4 antennes de réception d'un signal émis selon le système de la figure 1, selon un second mode de réalisation de l'invention, dit « avec ordonnancement » ;
- la figure 3 décrit les performances comparées des différents systèmes sans précodage linéaire de l'art antérieur et avec un précodage linéaire selon l'invention, pour une matrice de précodage de taille 4 et une matrice de précodage de taille 256.

## 7. Description d'un mode de réalisation de l'invention

Le principe général de l'invention repose sur un nouveau système de précodage linéaire à l'émission pour un système multi-antennes. Une matrice source, formée des vecteurs à émettre rangés en lignes successives, est multipliée par une matrice de précodage, de taille supérieure ou égale au nombre d'antennes à l'émission, pour former une matrice précodée. Chacun des symboles composant une même colonne de la matrice précodée est alors émis simultanément sur chacune des antennes d'émission, chaque antenne émettant un symbole différent de la colonne de la matrice précodée.

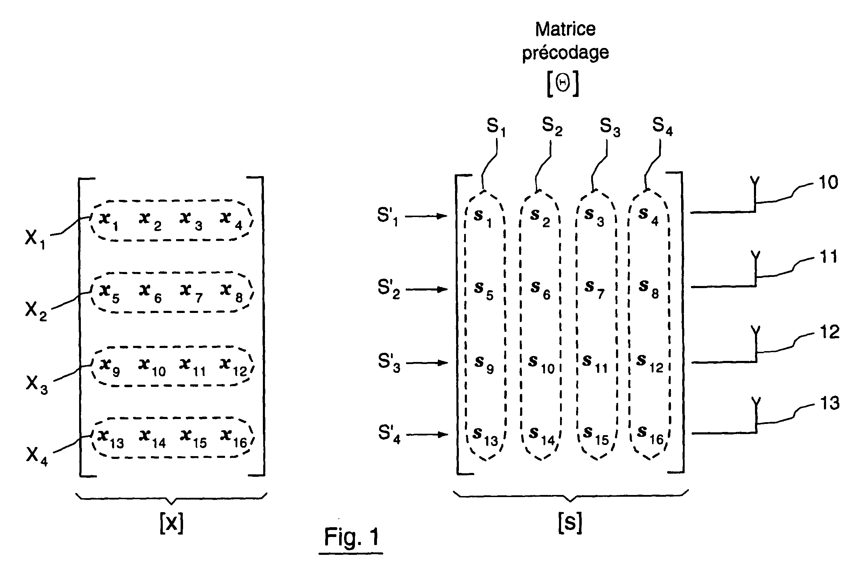

On présente, en relation avec la figure 1, un système à 4 antennes d'émission mettant en oeuvre une matrice source X et une matrice de précodage $\Theta$ selon l'invention.

Par souci de simplification, on se limite ici, et dans toute la suite du document, à décrire le cas particulier d'une matrice source X et d'une matrice de précodage $\Theta$ carrées.

L'Homme du Métier étendra sans difficulté cet enseignement à tous types de matrices X et $\Theta$, étant entendu que le nombre de colonnes de X doit être égal au nombre de lignes de $\Theta$, et que X doit compter M lignes, où M est le nombre d'antennes d'émission.

La matrice source X, qui comporte les informations à transmettre est formée de 4 vecteurs $X_1$, $X_2$, $X_3$, $X_4$, formant les lignes de la matrice X.

Chaque vecteur $X_i$, pour i=1 à 4, est formé de 4 symboles : $X_1=[x_1\ x_2\ x_3\ x_4]$, $X_2=[x_5\ x_6\ x_7\ x_8]$, $X_3=[x_9\ x_{10}\ x_{11}\ x_{12}]$, $X_4=[x_{13}\ x_{14}\ x_{15}\ x_{16}]$.

Le nombre total de symboles à émettre est donc de 16, ce qui correspond au nombre d'antennes d'émission M multiplié par le nombre L de lignes de la matrice de précodage $\Theta$.

La matrice de précodage $\Theta$ est de taille 4x4. C'est une matrice par blocs. Selon un mode de réalisation particulier, la matrice de précodage $\Theta$ est la suivante :

$$\Theta_L = \sqrt{\frac{2}{L}} \cdot \begin{bmatrix} \Theta_{L/2} & \Theta_{L/2} \\ \Theta_{L/2} & -\Theta_{L/2} \end{bmatrix}^T \text{ avec}$$

$$\Theta_2 = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix} \text{ et}$$

$$\eta = \frac{\pi}{4} + k\frac{\pi}{2}, \ \theta_2 = \theta_1 - \frac{\pi}{2}, \text{ et pour } i \in [1,2],$$

$$\theta_i = \frac{\pi}{4} + k'\frac{\pi}{2} \text{ où k, k' sont des entiers relatifs.}$$

Après multiplication de la matrice source X par la matrice de précodage $\Theta$, une matrice précodée S est obtenue (S=X.$\Theta$).

La matrice S, de taille 4x4, est composée de 4 vecteurs $S_i$ (i=1 à 4) : $S_1=[s_1\ s_5\ s_9\ s_{13}]$, $S_2=[s_2\ s_6\ s_{10}\ s_{14}]$, $S_3=[s_3\ s_7\ s_{11}\ s_{15}]$, $S_4=[s_4\ s_8\ s_{12}\ s_{16}]$.

Ces vecteurs $S_i$, encore appelés vecteurs précodés, correspondent à la multiplication de la matrice source X par une même colonne de la matrice de précodage $\Theta$. Ainsi $S_1$ correspond au vecteur obtenu par la multiplication de la matrice source X par la première colonne de la matrice de précodage $\Theta$, $S_2$ correspond au vecteur obtenu par la multiplication de la matrice source X par la deuxième colonne de la matrice de précodage $\Theta$, et ainsi de suite pour les 4 colonnes de la matrice $\Theta$.

A un instant donné, chacune des 4 antennes d'émission 10, 11, 12 et 13 émet alors un des symboles du même vecteur précodé $S_i$ dans la même salve d'envoi.

Ainsi, la première antenne 10 émet à un instant T0 le symbole s, du vecteur $S_1$. Sensiblement au même instant T0, la deuxième antenne 11 émet le symbole $S_5$ du vecteur $S_1$, la troisième antenne 12 émet le symbole $S_9$ du vecteur $S_1$ et la quatrième antenne 13 émet le symbole $S_{13}$ du vecteur $S_1$.

Les autres vecteurs précodés $S_2$, $S_3$ et $S_4$ sont respectivement émis dans trois salves d'envoi correspondant aux temps T1, T2 et T3.

Chacun des symboles d'un même vecteur précodé correspondant à la multiplication d'une matrice source X par une même colonne d'une matrice de précodage $\Theta$ est alors émis sur chacune des antennes d'émission, chaque antenne émettant un symbole différent du vecteur précodé.

Autrement dit, si on considère que la matrice S est formée de 4 vecteurs $S_1'$, $S_2'$, $S_3'$ $S_4'$ organisés en lignes successives, c'est-à-dire $S_1'=[s_1\ s_2\ s_3\ s_4]$, $S_2'=[s_5\ s_6\ s_7\ s_8]$, $S_3'=[s_9\ s_{10}\ s_{11}\ s_{12}]$, $S_4'=[s_{13}\ s_{14}\ s_{15}\ s_{16}]$, alors :

- les premiers symboles de chaque vecteur $S_i'$ (pour i=1 à 4) sont envoyés sur les différentes antennes d'émission simultanément, s, sur la première antenne et $s_{13}$ sur la dernière antenne ;
- les deuxièmes symboles de chaque vecteur $S_i'$ sont envoyés sur les différentes antennes d'émission simultanément, $s_2$ sur la première antenne et $s_{14}$ sur la dernière antenne ;
- cette opération est répétée jusqu'aux derniers symboles de chaque vecteur $S_i'$.

Finalement, le système transmet d'abord [$s_1\ s_5\ s_9\ s_{13}$] à un instant T0, puis [$s_2\ s_6\ s_{10}\ s_{14}$] à T1, puis [$s_9\ s_7\ s_{11}\ s_{15}$] à T2, et finalement [$s_4\ s_8\ s_{12}\ s_{16}$] à T3.

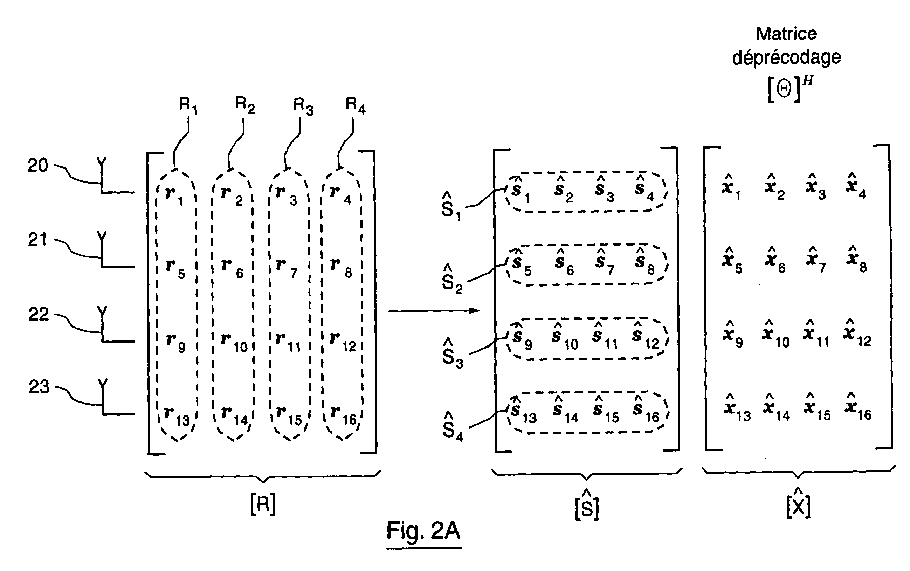

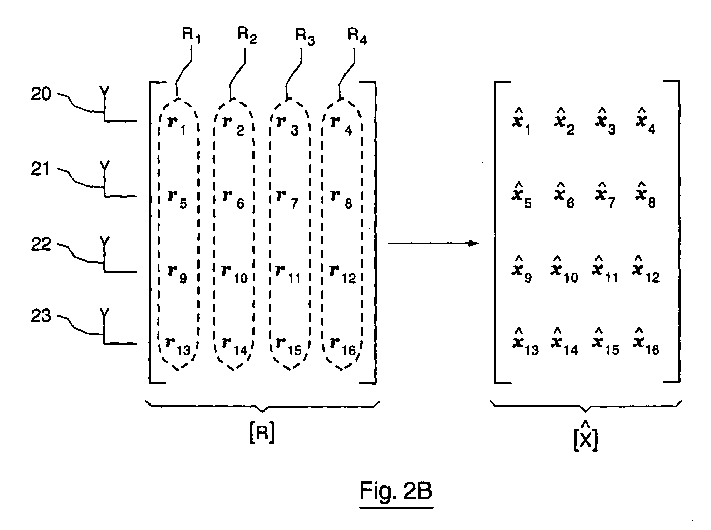

On présente en relation avec les figures 2A et 2B un système à 4 antennes de réception.

Après transmission dans le canal MIMO, les signaux reçus sont constitués de vecteurs $R_i$ (pour i=1 à 4) organisés en colonnes successives dans une matrice de réception R, où $R_1=[r_1\ r_5\ r_9\ r_{13}]$, $R_2=[r_2\ r_6\ r_{10}\ r_{14}]$, $R_3=[r_3\ r_7\ r_{11}\ r_{15}]$, $R_4=[r_4\ r_8\ r_{12}\ r_{16}]$.

Ainsi la matrice de réception R est formée des symboles [$r_1\ r_5\ r_9\ r_{13}$] reçus sensiblement au même instant T0', en fonction des longueurs des trajets sur chacune des voies antennes d'émission/antennes de réception, sur les 4 antennes de réception ($r_1$ sur la première antenne 20, $r_5$ sur la deuxième antenne 21, $r_9$ sur la troisième antenne 22 et $r_{13}$ sur la quatrième antenne 23), des symboles $[r_2\ r_6\ r_{10}\ r_{14}]$ reçus sensiblement au même instant T1' sur les 4 antennes de réception comme décrit précédemment, ainsi que des symboles $[r_3\ r_7\ r_{11}\ r_{15}]$ et $[r_4\ r_8\ r_{12}\ r_{16}]$ reçus aux temps T2' et T3'.

Selon un premier mode de réalisation illustré en figure 2A, on procède selon une technique dite « sans ordonnancement » (de l'anglais « ordering »). On commence tout d'abord par inverser le codage canal estimé sur les différentes voies antennes d'émission / antennes de réception, de façon à retrouver les symboles émis estimés.

Ainsi un algorithme à annulation successive est mis en oeuvre pour détecter les différentes antennes d'émission.

Cet algorithme est le suivant :

$$r = sH$$
$$R_r = HH^H + \sigma^2 I$$
$$a = rH^H$$

$$b = R_r^{-1}a = \frac{sHH^H}{HH^H + \sigma^2 I}$$

avec :

- $r$ correspond aux symboles reçus sur les P antennes de réception, soit à la matrice de réception R ;
- $H$ est le canal de taille (MxP) ;
- $\sigma^2$ le rapport signal sur bruit moyen des antennes de réception ;
- $R_r$ la matrice d'autocorrélation ;
- $a$ correspond à différents vecteurs de taille M selon l'équation décrite ci-dessus ;
- $b$ correspond d'abord aux estimées des différents vecteurs de symboles émis $[s_1\ s_5\ s_9\ s_{13}]$, puis aux estimées des symboles émis $[s_2\ s_6\ s_{10}\ s_{14}]$, ensuite aux estimées des symboles émis $[s_3\ s_7\ s_{11}\ s_{15}]$, et finalement aux estimées des symboles émis $[s_4\ s_8\ s_{12}\ s_{16}]$,
- l'exposant $^H$ signifie transposée conjuguée.

Cet algorithme s'apparente à un décodage V-BLAST comme décrit dans "Improving BLAST Performance using Space-Time Block Codes and Turbo Decoding", Globecom 2000, November 2000 (Baro, Bauch, Pavlic et Semmler) au sens de la minimisation de l'erreur quadratique moyenne (MMSE) permettant de retrouver les estimées $\hat{S}_i$ des vecteurs $S_i$ émis, pour i allant de 1 à 4.

Il revient à multiplier la matrice de réception R par une matrice représentative de l'inverse du canal de transmission.

Les vecteurs reçus sont ensuite réordonnés de manière à retrouver les estimées des vecteurs émis $S_1$, $S_2$, $S_3$, $S_4$ ou encore $S_1'$, $S_2'$, $S_3'$, $S_4'$, ces vecteurs estimés étant nommés $\hat{S}_1 = [\hat{s}_1\ \hat{s}_2\ \hat{s}_3\ \hat{s}_4]$, $\hat{S}_2 = [\hat{s}_5\ \hat{s}_6\ \hat{s}_7\ \hat{s}_8]$, $\hat{S}_3 = [\hat{s}_9\ \hat{s}_{10}\ \hat{s}_{11}\ \hat{s}_{12}]$ et $\hat{S}_4 = [\hat{s}_{13}\ \hat{s}_{14}\ \hat{s}_{15}\ \hat{s}_{16}]$ et étant organisés en lignes successives dans une matrice appelée matrice de symboles estimés.

Le récepteur multiplie alors la matrice de symboles estimés obtenue $\hat{S}$ par une matrice de déprécodage, cette matrice de déprécodage correspondant à la transposée conjuguée de la matrice de précodage $\Theta$ utilisée à l'émission (notée $\Theta^H$ en figure 2A), pour former une matrice déprécodée $\hat{X}$ permettant d'extraire une estimation des symboles source émis.

La matrice de précodage $\Theta$ étant unitaire, la multiplication de la matrice de symboles estimés obtenue $\hat{S}$ par la matrice de précodage transposée et conjuguée $\Theta^H$ revient à la multiplication de la matrice $\hat{S}$ par la matrice $\Theta^{-1}$ inverse de la matrice de précodage $\Theta$ : $\hat{X} = \hat{S}.\Theta^H = \hat{S}.\Theta^{-1}$.

L'étape de déprécodage $\Theta^H = \Theta^{-1}$ est donc effectuée au niveau de chaque itération V-BLAST.

Selon un deuxième mode de réalisation illustré en figure 2B, l'inversion du codage canal et l'opération de déprécodage sont effectuées conjointement, en mettant en oeuvre un algorithme de décomposition Cholesky, un tel algorithme étant notamment décrit dans "Modified Decorrelating Decision-Feedback Detection of BLAST Space-Time System" (ICC 2002 ,Vol. 1, pp. 335-339, Apr-May 2002) de Wei Zha et Steven D. Blostein. Cette technique est dite « avec ordonnancement ».

Dans ce mode de réalisation, le récepteur multiplie la matrice de réception R formée des vecteurs $R_1$ =[r, $r_5\ r_9\ r_{13}$], $R_2$=[$r_2\ r_6\ r_{10}\ r_{14}$], $R_3$=[$r_3\ r_7\ r_{11}\ r_{15}$], $R_4$=[$r_4\ r_8\ r_{12}\ r_{16}$] organisés en colonnes successives, par l'inverse d'une matrice globale G, la matrice G correspondant à l'association de la matrice de canal et de la matrice de précodage $\Theta$.

L'inverse de la matrice globale G, encore appelée matrice de déprécodage, est effectuée en mettant en oeuvre une décomposition de Cholesky, à l'intérieur de laquelle une opération d'ordonnancement est réalisée.

L'opération d'ordonnancement permet de prendre une décision d'abord sur le symbole ayant la plus forte puissance de la matrice globale G. Les symboles sont ainsi traités dans un ordre de puissance décroissant.

L'algorithme de Cholesky avec ordonnancement est le suivant :

$$R = X\Theta H$$

$$R_r = P_p(\Theta HH^H\Theta^H + \sigma^2 I)P_p^H$$

$$R_r = LL^H$$

$$R_r^{-1} = \left(L^H\right)^{-1} L^{-1}$$

$$x = RH^H \Theta^H P_p^H$$

$$y = x\left(L^H\right)^{-1}$$

$$z = P_p y L^{-1} = \frac{P_p X \Theta H H^H \Theta^H P_p^H}{P_p(\Theta H H^H \Theta^H + \sigma^2 I) P_p^H}$$

avec :

- *r* correspond aux symboles reçus sur les P antennes de réception, soit à la matrice de réception R ;
- X correspond à la matrice source émise ;
- $\Theta$ est la matrice de précodage de taille 4x4 ;
- H la matrice de canal de taille 4x4 ;
- $\sigma^2$ le rapport signal sur bruit moyen des antennes de réception ;
- $R_r$ la matrice d'autocorrélation ;
- L la matrice triangulaire inférieure de la matrice d'autocorrélation $R_r$ ;
- $P_p$ la matrice de permutation selon un critère de maximum de puissance du symbole voulu sur l'interférence de cette matrice d'autocorrélation ;
- x et y sont des vecteurs de taille 16 (le nombre d'antennes d'émission multiplié par le nombre de lignes de la matrice de précodage $\Theta$).

A la réception, l'algorithme de décomposition de Cholesky permet au récepteur d'obtenir directement un vecteur z de taille 16 (nombre d'antennes d'émission multiplié par le nombre de lignes de la matrice de précodage $\Theta$) correspondant à l'estimation des symboles émis de la matrice source X dans une matrice déprécodée $\hat{X}$.

La décomposition de Cholesky est une décomposition très stable numériquement.

Dans ce mode de réalisation, l'avantage du précodage est de décorréler les canaux s'ils sont corrélés.

La matrice de déprécodage étant une matrice par blocs, le système de réception peut encore être amélioré en utilisant une technique de minimisation de la distance par changement de symbole dans un bloc.

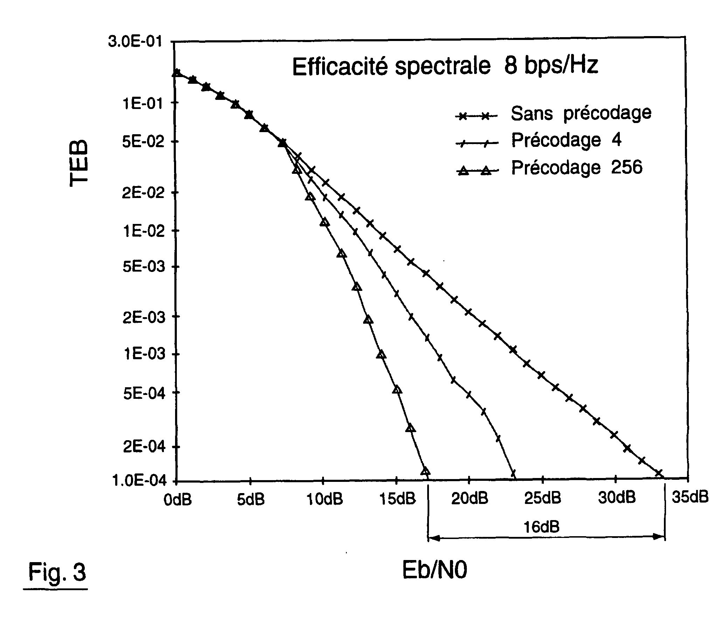

On présente désormais, en relation avec la figure 3, les performances obtenues, selon l'invention, en utilisant une matrice de précodage de taille 4x4 et une matrice de précodage de taille 256x256.

Plus précisément, la figure 3 illustre les performances de l'invention selon le premier mode de réalisation sans ordonnancement, c'est-à-dire lorsque la matrice de déprécodage correspond à la transposée conjuguée de la matrice de précodage, des systèmes utilisant un précodage linéaire selon l'invention étant comparés à un système sans précodage de l'art antérieur.

On peut observer un gain de 16.0 dB entre la courbe de référence, qui correspond à un système sans précodage, et la courbe avec précodage 256, qui correspond à un système utilisant une matrice de précodage de taille 256x256, lorsque le taux d'erreur binaire (TEB) est de $10^{-4}$, avec une efficacité spectrale de 8 bps/Hz, lorsqu'on utilise en réception des égaliseurs de type MMSE.

Ainsi l'invention améliore les performances à fort rapport signal à bruit, tout en conservant une complexité en $O(L^3)$, où L est la taille de la matrice de précodage, ou encore le nombre de lignes de la matrice de précodage si celle-ci n'est pas carrée.

L'approche de Ma et Giannakis ("Full-Diversity Full-Rate Complex-Field Space-Time Coding", IEEE Transactions on Signal Processing 2003) de l'art antérieur, qui utilise également des matrices de précodage, ne permet pas quant à elle d'avoir une matrice de précodage de taille 256, car la méthode serait beaucoup trop coûteuse en calcul. En effet, la complexité de cette approche est un facteur exponentiel en $O(M^L)$, où M correspond à la taille de la modulation.

Les performances de l'invention sont encore améliorées lorsque le second mode de réalisation avec ordonnancement est mis en oeuvre en réception.

En effet, lorsque ce mode de réalisation avec ordonnancement est mis en oeuvre, on obtient avec une matrice de précodage de taille 4x4 des résultats sensiblement identiques à ceux obtenus avec une matrice de précodage de taille 256 dans le mode de réalisation sans ordonnancement, c'est-à-dire un gain proche de 16.0 dB par rapport à une courbe de référence, qui correspond à un système sans précodage, lorsque le taux d'erreur binaire (TEB) est de $10^{-4}$, avec une efficacité spectrale de 8 bps/Hz.

Les performances du système s'améliorant lorsque la taille de la matrice de précodage augmente, on obtient de très bons résultats pour un système avec ordonnancement et une matrice de précodage de taille 256x256.

Ainsi, l'invention proposée permet un décodage moins complexe et moins coûteux que les techniques de l'art antérieur, tout en présentant des performances améliorées.

Par ailleurs, la technique de l'invention est aussi bien adaptée pour les systèmes à modulations de type monoporteuse que pour les systèmes à modulations de type multi-porteuses (OFDM ou MC-CDMA par exemple).

Elle peut s'appliquer à tout système multi-antennes privilégiant l'exploitation de la capacité, et ce, même si les canaux multi-antennes sont corrélés.

## Revendications

1. Procédé d'émission d'un signal formé de vecteurs comprenant chacun N symboles source à émettre, et mettant en oeuvre M antennes d'émission, où M est supérieur ou égal à 2,
**caractérisé en ce qu'**on réalise un précodage linéaire dudit signal, mettant en oeuvre un produit matriciel d'une matrice source (X), formée desdits vecteurs ($X_1$, $X_2$, $X_3$, $X_4$) organisés en lignes successives, par une matrice de précodage linéaire ($\Theta$), délivrant une matrice précodée (S),
et **en ce qu'**on émet successivement des vecteurs précodés ($S_1$, $S_2$, $S_3$, $S_4$) correspondant à des colonnes de ladite matrice précodée, les M symboles de chaque vecteur précodé étant distribués sur lesdites M antennes.

2. Procédé d'émission selon la revendication 1, **caractérisé en ce que** ladite matrice de précodage ($\Theta$) est une matrice par blocs.

3. Procédé d'émission selon l'une quelconque des revendications 1 et 2, **caractérisé en ce que** ladite matrice de précodage ($\Theta$) est une matrice unitaire de taille supérieure ou égale à M.

4. Procédé d'émission selon l'une quelconque des revendications 1 à 3, **caractérisé en ce que** ladite matrice de précodage ($\Theta$) est de la forme :

$$\Theta_L = \sqrt{\frac{2}{L}} \cdot \begin{bmatrix} \Theta_{L/2} & \Theta_{L/2} \\ \Theta_{L/2} & -\Theta_{L/2} \end{bmatrix}^T$$

avec $\Theta_2 = \begin{bmatrix} e^{i\theta_1}\cos\eta & e^{i\theta_2}\sin\eta \\ -e^{-i\theta_2}\sin\eta & e^{-i\theta_1}\cos\eta \end{bmatrix}$

et $\eta = \dfrac{\pi}{4} + k\dfrac{\pi}{2}$, $\theta_2 = \theta_1 - \dfrac{\pi}{2}$, et pour $i \in [1,2]$,

$\theta_i = \dfrac{\pi}{4} + k'\dfrac{\pi}{2}$ où k, k' sont des entiers relatifs.

5. Procédé de réception d'un signal émis sur M antennes d'émission, où M est supérieur ou égal à 2, ledit procédé mettant en oeuvre P antennes de réception, où P est supérieur ou égal à 2,
**caractérisé en ce qu'**on reçoit sur lesdites P antennes des vecteurs de réception ($R_1$, $R_2$, $R_3$, $R_4$) que l'on répartit par colonnes dans une matrice de réception, les P symboles d'un vecteur de réception étant répartis sur lesdites P antennes,
lesdits vecteurs de réception ($R_1$, $R_2$, $R_3$, $R_4$) correspondant à des vecteurs précodés ($S_1$, $S_2$, $S_3$, $S_4$) émis successivement à l'émission, les M symboles de chaque vecteur précodé étant distribués sur lesdites M antennes,
lesdits vecteurs précodés correspondant à des colonnes d'une matrice précodée (S), obtenue en mettant en oeuvre un produit matriciel d'une matrice source (X), formée de vecteurs comprenant chacun N symboles source à émettre organisés en lignes successives, par une matrice de précodage linéaire ($\Theta$),
et **en ce qu'**il met en oeuvre un traitement de ladite matrice de réception comprenant une étape de multiplication par une matrice de déprécodage linéaire représentative de ladite matrice de précodage linéaire ($\Theta$) utilisée à l'émission, de façon à obtenir une matrice déprécodée permettant d'extraire une estimation des symboles source émis.

6. Procédé de réception selon la revendication 5, **caractérisé en ce que** ladite matrice de déprécodage est la matrice transposée conjuguée de ladite matrice de précodage.

7. Procédé de réception selon la revendication 6, **caractérisé en ce que**, ledit signal émis étant véhiculé entre lesdites M antennes d'émission et lesdites P antennes de réception par un canal de transmission, on multiplie, lors dudit traitement, ladite matrice de réception par une matrice représentative de l'inverse dudit canal de transmission, de façon à obtenir une matrice de symboles émis estimés,
et **en ce qu'**on multiplie ensuite ladite matrice de symboles émis estimés par ladite matrice de déprécodage.

8. Procédé de réception selon l'une quelconque des revendications 6 et 7, **caractérisé en ce qu'**il comprend une étape préliminaire de détection desdites M antennes d'émission mettant en oeuvre un algorithme à annulation successive.

9. Procédé de réception selon la revendication 5, **caractérisé en ce que**, ledit signal émis étant véhiculé entre lesdites M antennes d'émission et lesdites P antennes de réception par un canal de transmission, ladite matrice de déprécodage est une matrice inverse d'une matrice globale associant la matrice dudit canal et ladite matrice de précodage linéaire.

10. Procédé de réception selon la revendication 9, **caractérisé en ce que** ladite matrice de déprécodage est déterminée par mise en oeuvre d'un algorithme de décomposition de Cholesky.

11. Signal formé de vecteurs émis successivement sur M antennes d'émission, où M est supérieur ou égal à 2, les M symboles de chaque vecteur étant distribués sur lesdites M antennes,
**caractérisé en ce que** lesdits vecteurs sont des vecteurs précodés ($S_1$, $S_2$, $S_3$, $S_4$) correspondant à des colonnes d'une matrice précodée obtenue par produit matriciel d'une matrice de précodage linéaire ($\Theta$) et d'une matrice source (X), formée de vecteurs source comprenant chacun N symboles source à émettre, lesdits vecteurs source ($X_1$, $X_2$, $X_3$, $X_4$) étant organisés dans ladite matrice source en lignes successives.

12. Dispositif d'émission d'un signal formé de vecteurs comprenant chacun N symboles source à émettre, et mettant en oeuvre M antennes d'émission, où M est supérieur ou égal à 2,
**caractérisé en ce qu'**il comprend des moyens de précodage linéaire dudit signal, mettant en oeuvre un produit matriciel d'une matrice source (X), formée desdits vecteurs ($X_1$, $X_2$, $X_3$, $X_4$) organisés en lignes successives, par une matrice de précodage linéaire ($\Theta$), délivrant une matrice précodée (S),
et des moyens d'émission successive des vecteurs précodés ($S_1$, $S_2$, $S_3$, $S_4$) correspondant à des colonnes de ladite matrice précodée, les M symboles de chaque vecteur précodé étant distribués sur lesdites M antennes.

13. Dispositif de réception d'un signal émis sur M antennes d'émission, où M est supérieur ou égal à 2, ledit dispositif comprenant P antennes de réception, où P est supérieur ou égal à 2,
**caractérisé en ce qu'**il comprend des moyens de réception, sur lesdites P antennes, de vecteurs de réception ($R_1$, $R_2$, $R_3$, $R_4$), et des moyens de répartition par colonnes desdits vecteurs de réception dans une matrice de réception, les P symboles d'un vecteur de réception étant répartis sur lesdites P antennes,
lesdits vecteurs de réception ($R_1$, $R_2$, $R_3$, $R_4$) correspondant à des vecteurs précodés ($S_1$, $S_2$, $S_3$, $S_4$) émis successivement à l'émission, les M symboles de chaque vecteur précodé étant distribués sur lesdites M antennes,
lesdits vecteurs précodés correspondant à des colonnes d'une matrice précodée (S), obtenue en mettant en oeuvre un produit matriciel d'une matrice source (X), formée de vecteurs comprenant chacun N symboles source à émettre organisés en lignes successives, par une matrice de précodage linéaire ($\Theta$),
et **en ce qu'**il comprend des moyens de traitement de ladite matrice de réception comprenant des moyens de multiplication par une matrice de déprécodage linéaire représentative de ladite matrice de précodage linéaire utilisée à l'émission,
de façon à obtenir une matrice déprécodée permettant d'extraire une estimation des symboles source émis.

**Patentansprüche**

1. Verfahren zum Senden eines von je N zu sendende Quellensymbole enthaltenden Vektoren geformten Signals, und das M Sendeantennen anwendet, wobei M größer als oder gleich 2 ist,
**dadurch gekennzeichnet, dass** eine lineare Vorcodierung des Signals unter Anwendung eines Matrixprodukts einer von den in aufeinanderfolgenden Zeilen organisierten Vektoren ($X_1$, $X_2$, $X_3$, $X_4$) geformten Quellenmatrix (X) durch eine lineare Vorcodierungsmatrix ($\Theta$) durchgeführt wird, die eine vorcodierte Matrix (S) liefert,
und dass nacheinander Spalten der vorcodierten Matrix entsprechende vorcodierte Vektoren ($S_1$, $S_2$, $S_3$, $S_4$) gesendet werden, wobei die M Symbole jedes vorcodierten Vektors auf die M Antennen verteilt sind.

2. Sendeverfahren nach Anspruch 1, **dadurch gekennzeichnet, dass** die Vorcodierungsmatrix ($\Theta$) eine Blockmatrix ist.

3. Sendeverfahren nach einem der Ansprüche 1 und 2, **dadurch gekennzeichnet, dass** die Vorcodierungsmatrix ($\Theta$) eine Einheitsmatrix einer Größe von mehr als oder gleich M ist.

4. Sendeverfahren nach einem der Ansprüche 1 bis 3, **dadurch gekennzeichnet, dass** die Vorcodierungsmatrix ($\Theta$) die folgende Form hat:

$$\Theta_L = \sqrt{\frac{2}{L}} \cdot \begin{bmatrix} \Theta_{L/2} & \Theta_{L/2} \\ \Theta_{L/2} & -\Theta_{L/2} \end{bmatrix}^T$$

$$\text{mit } \Theta_2 = \begin{vmatrix} e^{i\theta_1}\cos\eta & e^{i\theta_2}\sin\eta \\ -e^{-i\theta_2}\sin\eta & e^{-i\theta_1}\cos\eta \end{vmatrix}$$

und $\eta = \dfrac{\pi}{4} + k\dfrac{\pi}{2}$, $\theta_2 = \theta_1 - \dfrac{\pi}{2}$, und für $i \in [1,2]$,

$\theta_1 = \dfrac{\pi}{4} + k'\dfrac{\pi}{2}$, wobei k, k' relative ganze Zahlen sind.

5. Verfahren zum Empfang eines auf M Sendeantennen gesendeten Signals, wobei M größer als oder gleich 2 ist, wobei das Verfahren P Empfangsantennen verwendet, wobei P größer als oder gleich 2 ist,
**dadurch gekennzeichnet, dass** auf den P Antennen Empfangsvektoren ($R_1$, $R_2$, $R_3$, $R_4$) empfangen werden, die in Spalten in einer Empfangsmatrix verteilt sind, wobei die P Symbole eines Empfangsvektors auf die P Antennen verteilt sind,

wobei die Empfangsvektoren ($R_1$, $R_2$, $R_3$, $R_4$) nacheinander beim Senden gesendeten, vorcodierten Vektoren ($S_1$, $S_2$, $S_3$, $S_4$) entsprechen, wobei die M Symbole jedes vorcodierten Vektors auf die M Antennen verteilt sind,

wobei die vorcodierten Vektoren Spalten einer vorcodierten Matrix (S) entsprechen, die unter Anwendung eines Matrixprodukts einer von in aufeinanderfolgenden Zeilen organisierten, je N zu sendende Symbole enthaltenden Vektoren geformten Quellenmatrix (X) durch eine lineare Vorcodierungsmatrix ($\Theta$) erhalten wird,

und dass es eine Verarbeitung der Empfangsmatrix anwender, die einen Schritt der Multiplikation mit einer linearen Entvorcodierungsmatrix enthält, die für die beim Senden verwendete lineare Vorcodierungsmatrix ($\Theta$) repräsentativ ist,

um eine entvorcodierte Matrix zu erhalten, die es ermöglicht, eine Schätzung der gesendeten Quellensymbole zu entnehmen.

6. Empfangsverfahren nach Anspruch 5, **dadurch gekennzeichnet, dass** die Entvordecodierungsmatrix die transponiert-konjugierte Matrix der Vorcodierungsmatrix ist.

7. Empfangsverfahren nach Anspruch 6, **dadurch gekennzeichnet, dass**, da das gesendete Signal zwischen den M Sendeantennen und den P Empfangsantennen über einen Übertragungskanal übermittelt wird, bei der Verarbeitung die Empfangsmatrix mit einer Matrix multipliziert wird, die für den Umkehrwert des Übertragungskanals repräsentativ ist, um eine Matrix von geschätzten gesendeten Signalen zu erhalten,

und dass anschließend die Matrix von geschätzten gesendeten Symbolen mit der Entvordecodierungsmatrix multipliziert wird.

8. Empfangsverfahren nach einem der Ansprüche 6 und 7, **dadurch gekennzeichnet, dass** es einen vorhergehenden Schritt der Erfassung der M Sendeantennen enthält, der einen Algorithmus mit aufeinanderfolgender Unterdrückung anwendet.

9. Empfangsverfahren nach Anspruch 5, **dadurch gekennzeichnet, dass**, da das gesendete Signal zwischen den M Sendeantennen und den P Empfangsantennen von einem Übertragungskanal übermittelt wird, die Entvordecodierungsmatrix eine umgekehrte Matrix einer globalen Matrix ist, die die Matrix des Kanals und die lineare Vorcodierungsmatrix miteinander verbindet.

10. Empfangsverfahren nach Anspruch 9, **dadurch gekennzeichnet, dass** die Entvordecodierungsmatrix durch Anwendung eines Cholesky-Zerlegungsalgorithmus bestimmt wird.

11. Signal, das von nacheinander auf M Sendeantennen gesendeten Vektoren geformt wird, wobei M größer als oder gleich 2 ist, wobei die M Symbole jedes Vektors auf die M Antennen verteilt sind,

**dadurch gekennzeichnet, dass** die Vektoren Spalten einer vorcodierten Matrix entsprechende vorcodierte Vektoren ($S_1$, $S_2$, $S_3$, $S_4$) sind, die durch Matrixprodukt einer linearen Vorcodierungsmatrix ($\Theta$) und einer Quellenmatrix (X) erhalten wird, die von je N zu sendende Quellensymbole enthaltenden Quellenvektoren geformt wird, wobei die Quellenvektoren ($X_1$, $X_2$, $X_3$, $X_4$) in der Quellenmatrix in aufeinanderfolgenden Zeilen organisiert sind.

12. Vorrichtung zum Senden eines Signals, das von je N zu sendende Quellensymbole enthaltenden Vektoren geformt wird, und die M Sendeantennen verwendet, wobei M größer als oder gleich 2 ist,

**dadurch gekennzeichnet, dass** sie Einrichtungen zur linearen Vorcodierung des Signals enthält, die ein Matrixprodukt einer von den in aufeinanderfolgenden Zeilen organisierten Vektoren ($X_1$, $X_2$, $X_3$, $X_4$) geformten Quellenmatrix (X) mit einer linearen Vorcodierungsmatrix ($\Theta$) verwenden, das eine vorcodierte Matrix (S) liefert,

und Einrichtungen zum aufeinanderfolgenden Senden der Spalten der vorcodierten Matrix entsprechenden vorcodierten Vektoren ($S_1$, $S_2$, $S_3$, $S_4$), wobei die M Symbole jedes vorcodiertem Vektors auf die M Antennen verteilt sind.

13. Vorrichtung zum Empfang eines auf M Sendeantennen gesendeten Signals, wobei M größer als oder gleich 2 ist, wobei die Vorrichtung P Empfangsantennen enthält wobei P größer als oder gleich 2 ist,

**dadurch gekennzeichnet, dass** sie Einrichtungen zum Empfang, auf den P Antennen, von Empfangsvektoren ($R_1$, $R_2$, $R_3$, $R_4$) und Einrichtungen zur spaltenweisen Verteilung der Empfangsvektoren in einer Empfangsmatrix enthält, wobei die P Symbole eines Empfangsvektors auf die P Antennen verteilt sind,

wobei die Empfangsvektoren ($R_1$, $R_2$, $R_3$, $R_4$) nacheinander beim Senden gesendeten vorcodierten Vektoren ($S_1$, $S_2$, $S_3$, $S_4$) entsprechen, wobei die M Symbole jedes vorcodierten Vektors auf die M Antennen verteilt sind,

wobei die vorcodierten Vektoren Spalten einer vorcodierten Matrix (S) entsprechen, die durch Anwendung eines Matrixprodukts einer von in aufeinanderfolgenden Zeilen organisierten, je N zu sendende Quellensymbole enthaltenden Vektoren geformten Quellenmatrix (X) mit einer linearen Vorcodierungsmatrix ($\Theta$) erhalten wird,

und dass sie Einrichtungen zur Verarbeitung der Empfangsmatrix enthält, die Einrichtungen zur Multiplikation mit einer linearen Entvorcodierungsmatrix enthalten, die für die beim Senden verwendete lineare Vorcodierungsmatrix repräsentativ ist, um eine entvordecodierte Matrix zu erhalten, die es ermöglicht, eine Schätzung der gesendeten Quellensymbole zu entnehmen.

**Claims**

1. Method for transmitting a signal formed of vectors each comprising N source symbols to be transmitted, and implementing M transmit antennas, where M is greater than or equal to 2, **characterized in that** a linear precoding of said signal is carried out, implementing a matrix product of a source matrix (X), formed of said vectors ($X_1$, $X_2$, $X_3$, $X_4$) organized into successive rows, by a linear precoding matrix ($\Theta$), delivering a precoded matrix (S), and **in that** precoded vectors ($S_1$, $S_2$, $S_3$, $S_4$) corresponding to columns of said precoded matrix are transmitted successively, the M symbols of each precoded vector being distributed over said M antennas.

2. Transmission method according to Claim 1, **characterized in that** said precoding matrix ($\Theta$) is a block matrix.

3. Transmission method according to either one of Claims 1 and 2, **characterized in that** said precoding matrix ($\Theta$) is a unit matrix of size greater than or equal to M.

4. Transmission method according to any one of Claims 1 to 3, **characterized in that** said precoding matrix ($\Theta$) is of the form:

$$\Theta_L = \sqrt{\frac{2}{L}} \cdot \begin{bmatrix} \Theta_{L/2} & \Theta_{L/2} \\ \Theta_{L/2} & -\Theta_{L/2} \end{bmatrix}^T$$

with $\Theta_2 = \begin{vmatrix} e^{i\theta_1}\cos\eta & e^{i\theta_2}\sin\eta \\ -e^{-i\theta_2}\sin\eta & e^{-i\theta_1}\cos\eta \end{vmatrix}$

and $\eta = \frac{\pi}{4} + k\frac{\pi}{2}, , \theta_2 = \theta_1 - \frac{\pi}{2},$

$$\theta_i = \frac{\pi}{4} + k'\frac{\pi}{2}$$

where k, k' are relative integers.

5. Method for receiving a signal transmitted on M transmit antennas, where M is greater than or equal to 2, said method implementing P receive antennas, where P is greater than or equal to 2, **characterized in that** reception vectors ($R_1$, $R_2$, $R_3$, $R_4$) are received on said P antennas and are then distributed column-wise in a reception matrix, the P symbols of a reception vector being distributed over said P antennas, said reception vectors ($R_1$, $R_2$, $R_3$, $R_4$) corresponding to precoded vectors ($S_1$, $S_2$, $S_3$, $S_4$) transmitted successively on transmission, the M symbols of each precoded vector being distributed over said M antennas, said precoded vectors corresponding to columns of a precoded matrix (S), obtained by implementing a matrix product of a source matrix (X), formed of vectors each comprising N source symbols to be transmitted organized into successive rows, by a linear precoding matrix ($\Theta$), and **in that** it implements a processing of said reception matrix comprising a step of multiplication by a linear deprecoding matrix representative of said linear precoding matrix ($\Theta$) used on transmission, so as to obtain a deprecoded matrix making it possible to extract an estimation of the source symbols transmitted.

6. Reception method according to Claim 5, **characterized in that** said deprecoding matrix is the conjugate transpose matrix of said precoding matrix.

7. Reception method according to Claim 6, **characterized in that**, said transmitted signal being conveyed between said M transmit antennas and said P receive antennas by a transmission channel, said reception matrix is multiplied, during said processing, by a matrix representative of the inverse of said transmission channel, so as to obtain a matrix of estimated transmitted symbols, and **in that** said matrix of estimated transmitted symbols is thereafter multiplied by said deprecoding matrix.

8. Reception method according to either one of Claims 6 and 7, **characterized in that** it comprises a preliminary step of detecting said M transmit antennas implementing a successive-cancellation algorithm.

9. Reception method according to Claim 5, **characterized in that**, said transmitted signal being conveyed between said M transmit antennas and said P receive antennas by a transmission channel, said deprecoding matrix is an inverse matrix of a global matrix associating the matrix of said channel and said linear precoding matrix.

**10.** Reception method according to Claim 9, **characterized in that** said deprecoding matrix is determined by implementing a Cholesky decomposition algorithm.

**11.** Signal formed of vectors transmitted successively on M transmit antennas, where M is greater than or equal to 2, the M symbols of each vector being distributed over said M antennas, **characterized in that** said vectors are precoded vectors $(S_1, S_2, S_3, S_4)$ corresponding to columns of a precoded matrix obtained by matrix product of a linear precoding matrix $(\Theta)$ and of a source matrix $(X)$, formed of source vectors each comprising N source symbols to be transmitted, said source vectors $(X_1, X_2, X_3, X_4)$ being organized in said source matrix into successive rows.

**12.** Device for transmitting a signal formed of vectors each comprising N source symbols to be transmitted, and implementing M transmit antennas, where M is greater than or equal to 2, **characterized in that** it comprises means of linear precoding of said signal, implementing a matrix product of a source matrix $(X)$, formed of said vectors $(X_1, X_2, X_3, X_4)$ organized into successive rows, by a linear precoding matrix $(\Theta)$, delivering a precoded matrix $(S)$, and means of successive transmission of the precoded vectors $(S_1, S_2, S_3, S_4)$ corresponding to columns of said precoded matrix, the M symbols of each precoded vector being distributed over said M antennas.

**13.** Device for receiving a signal transmitted on M transmit antennas, where M is greater than or equal to 2, said device comprising P receive antennas, where P is greater than or equal to 2, **characterized in that** it comprises means of reception, on said P antennas, of reception vectors $(R_1, R_2, R_3, R_4)$, and means of column-wise distribution of said reception vectors in a reception matrix, the P symbols of a reception vector being distributed over said P antennas, said reception vectors $(R_1, R_2, R_3, R_4)$ corresponding to precoded vectors $(S_1, S_2, S_3, S_4)$ transmitted successively on transmission, the M symbols of each precoded vector being distributed over said M antennas, said precoded vectors corresponding to columns of a precoded matrix $(S)$, obtained by implementing a matrix product of a source matrix $(X)$, formed of vectors each comprising N source symbols to be transmitted organized into successive rows, by a linear precoding matrix $(\Theta)$, and **in that** it comprises means for processing said reception matrix comprising means of multiplication by a linear deprecoding matrix representative of said linear precoding matrix used on transmission, so as to obtain a deprecoded matrix making it possible to extract an estimation of the source symbols transmitted.

EP 1 690 361 B1

Matrice
précodage

$[\Theta]$

Fig. 1

Matrice
déprécodage
$[\Theta]^H$

$R_1$ $R_2$ $R_3$ $R_4$

$$[R] = \begin{bmatrix} r_1 & r_2 & r_3 & r_4 \\ r_5 & r_6 & r_7 & r_8 \\ r_9 & r_{10} & r_{11} & r_{12} \\ r_{13} & r_{14} & r_{15} & r_{16} \end{bmatrix}$$

$$[\hat{S}] = \begin{bmatrix} \hat{s}_1 & \hat{s}_2 & \hat{s}_3 & \hat{s}_4 \\ \hat{s}_5 & \hat{s}_6 & \hat{s}_7 & \hat{s}_8 \\ \hat{s}_9 & \hat{s}_{10} & \hat{s}_{11} & \hat{s}_{12} \\ \hat{s}_{13} & \hat{s}_{14} & \hat{s}_{15} & \hat{s}_{16} \end{bmatrix}$$

$$[\hat{X}] = \begin{bmatrix} \hat{x}_1 & \hat{x}_2 & \hat{x}_3 & \hat{x}_4 \\ \hat{x}_5 & \hat{x}_6 & \hat{x}_7 & \hat{x}_8 \\ \hat{x}_9 & \hat{x}_{10} & \hat{x}_{11} & \hat{x}_{12} \\ \hat{x}_{13} & \hat{x}_{14} & \hat{x}_{15} & \hat{x}_{16} \end{bmatrix}$$

Fig. 2A

EP 1 690 361 B1

EP 1 690 361 B1

$R_1$ $R_2$ $R_3$ $R_4$

20

21

22

23

$$\begin{bmatrix} r_1 & r_2 & r_3 & r_4 \\ r_5 & r_6 & r_7 & r_8 \\ r_9 & r_{10} & r_{11} & r_{12} \\ r_{13} & r_{14} & r_{15} & r_{16} \end{bmatrix} \longrightarrow \begin{bmatrix} \hat{x}_1 & \hat{x}_2 & \hat{x}_3 & \hat{x}_4 \\ \hat{x}_5 & \hat{x}_6 & \hat{x}_7 & \hat{x}_8 \\ \hat{x}_9 & \hat{x}_{10} & \hat{x}_{11} & \hat{x}_{12} \\ \hat{x}_{13} & \hat{x}_{14} & \hat{x}_{15} & \hat{x}_{16} \end{bmatrix}$$

$[R]$ $[\hat{X}]$

Fig. 2B

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FOSCHINI.** Layered Space-Time Architecture for Wireless Communication in a Fading Environment When Using Multiple Antennas. *Bell Laboratories Technical Journal,* 1996, vol. 1 (2), 41-59
- **WOLNIANSKY ; FOSCHINI ; GOLDEN ; VALENZUELA.** V-BLAST: An Architecture for Realizing Very High Data Rates Over the Rich-Scattering Wireless Channel. *Proc. ISSSE-98, Pisa, Italy,* 29 Septembre 1998
- **BARO ; BAUCH ; PAVLIC ; SEMMLER.** Improving BLAST Performance using Space-Time Block Codes and Turbo Decoding. *Globecom,* 2000
- **MA ; GIANNAKIS.** Full-Diversity Full-Rate Complex-Field Space-Time Coding. *IEEE Transactions on Signal Processing,* 2003
- **V. LE NIR ; M. HÉLARD.** Reduced-complexity space-time block coding and decoding schemes with block linear precoding. *Electronics Letters, IEE Stevenage, GB,* 10 Juillet 2003, vol. 39 (14
- **BARO ; BAUCH ; PAVLIC ; SEMMLER.** Improving BLAST Performance using Space-Time Block Codes and Turbo Decoding. *Globecom,* Novembre 2000
- **WEI ZHA ; STEVEN D. BLOSTEIN.** Modified Decorrelating Decision-Feedback Detection of BLAST Space-Time System. *ICC 2002,* Avril 2002, vol. 1, 335-339
- **MA ; GIANNAKIS.** Full-Diversity Full-Rate Complex-Field Space-Time Coding. *IEEE Transactions on Signal Processing 2003,* 2003